Europäisches Patentamt

European Patent Office

Office européen des brevets

(11) Publication number: **0 115 438**
**B1**

(12) EUROPEAN PATENT SPECIFICATION

(45) Date of publication of patent specification: **22.03.89**

(51) Int. Cl.⁴: **B 65 H 3/14,** B 65 H 7/12

(21) Application number: **84300520.8**

(22) Date of filing: **27.01.84**

(54) Separating an item from a stack.

(30) Priority: **31.01.83 GB 8302545**
**29.04.83 GB 8311812**

(43) Date of publication of application:
**08.08.84 Bulletin 84/32**

(45) Publication of the grant of the patent:
**22.03.89 Bulletin 89/12**

(84) Designated Contracting States:
**AT CH DE FR IT LI**

(56) References cited:
**FR-A-2 277 754**
**NL-A-6 808 522**

**IBM TECHNICAL DISCLOSURE BULLETIN , Vol.
19, No. 2, July 1976, page 441, NEW YORK,
(US). D.F. MANNING et al.: "Air jet sheet
separator".**

(73) Proprietor: **The University of Hull
Cottingham Road
Kingston-upon-Hull HU6 7RX (GB)**
(73) Proprietor: **Corah p.l.c.
P.O. Box 32 Burleys Way
Leicester, LE1 9BB (GB)**

(72) Inventor: **Kemp, Douglas Raymond
11 Yew Tree Road
Edgbaston Birmingham Bl5 2LX (GB)**

(74) Representative: **Hallam, Arnold Vincent et al
E.N. LEWIS & TAYLOR 144 New Walk
Leicester LE1 7JA (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

## Description

This invention relates to the separation of an item from a stack of such items. The items may be sheets of fabric or other material and separated items are taken away for use in any suitable manner.

The separation of one item from the top of a stack, e.g. a piece of paper for a printing machine or a bag to receive an object, is a very difficult action to carry out reliably with a simple machine. The failure to supply an item, or the supply of item damaged or incorrectly aligned, can disrupt a later part of a process.

FR—A—2 277 754 describes a device for separating the top piece of a stack of fabric pieces by directing an air jet at the top piece to cause it to float on a cushion of air. An edge of the top piece lifts to overlie a finger by means of which the top piece can then be removed from the stack.

NL—A—6 808 522 discloses an apparatus for stacking pieces of textile material. The apparatus has a clamp across the jaws of which a jet of air is directed. This impinges on a microswitch to activate the switch. When a piece of material is brought between the jaws the airflow is interrupted, tripping the switch and causing the clamp to clamp the material. The material can then be removed and stacked.

It is an object of the invention to provide an apparatus to reliably separate an item from a stack in an automatic manner.

In addition to reliable separation it is also a frequent requirement that a separated item is carried or placed in a particular orientation or manner.

It is a further object of the invention to provide an apparatus to pick up, and if required, transfer and place an item in a specified manner.

According to the invention there is provided an apparatus to separate a top-most item (62) from a stack (60) of items comprising a separation means (10) moveable to project over said stack (60) of items at a selected distance above the top-most item (62) of the stack; means (51) to direct an air stream at a size and an angle to the top-most item (62) of the stack adjacent the separation means (10) to cause said top-most item to vibrate at a frequency high enough to be contained substantially within said top-most item, characterised in that said means (51) to direct an air stream is controllable to change the intensity of the air jet in order to produce a higher intensity first while said separation means (10) is moving into position to start the vibration of the top-most item (62) of the stack which is then sustained by a less intense jet; and further comprising means (43) to detect the disturbance of the top-most item (62) and cause the separation means to approach the stack top and the disturbed top-most item; means (13) to detect the displacement of the vibrating disturbed top-most item (62) from the top of the stack to overlay the projecting separation means (10); and gripper means (20) responsive to the detection of said displacement of the top-most item to co-operate with the separation means to grip the item for removal from the stack.

In a preferred embodiment of the invention the apparatus has means to detect the overlaying of the separation means with more than one item and to cause the apparatus to abandon an attempt to separate the top-most item in response to detection of overlaying with more than one item. The detection means preferably assesses the transmissiveness of anything overlying the separation means and has a filter to reject extraneous radiation. Separation of the top-most item may be assisted by use of a further member to enhance the disturbance of the top-most item, the further member being resiliently supported to float in the air stream over the top-most item of the stack.

The gripper means preferably includes detection means such as the combination of a light emitting diode and a photo transistor which detects the position of an edge of the top-most item in the gripper means and the depth to which the edge enters the gripper means.

The present invention is further described hereinafter by way of example, with reference to the accompanying drawings, in which:

Figure 1 shows an item separating apparatus according to the invention arranged for use on a "robot".

Figure 2 shows a general view of the form of this apparatus.

Figure 3 shows a circuit diagram of an additional sensing arrangement.

Figure 4 shows an optional modification for the apparatus of Figure 1.

Figure 5 shows an alternative circuit for the apparatus of Figure 1, and

Figure 6 shows a truth table for the circuit of Figure 5.

The term "robot" used herein refers to a device which is capable of supporting and moving the separating apparatus in a controlled manner to a position in which the separation of items is to be done and, generally but not always, removing a separated item for use. The exact form of the robot is not part of the invention. The necessary control signals and other details of the interface to a particular robot will be apparent to those skilled in the art and are not described here. It is to be noted that apparatus embodying the invention does not have to be used with a "robot" but can for example be included in a more simple production line machine.

In the drawing the robot/separating apparatus interface is indicated as a chain dotted line RS, reference R representing the robot side of the interface and S the separating apparatus.

In the illustrated embodiment the separating apparatus has a first, or separation, member 10 and a second, or gripper, member 20 in the form of bars supported in a housing 30 by which the apparatus is attached to the robot 40. The members 10 and 20 are supported in housing 30 so that the members can come together to grip and hold an item, such as a sheet, bag or other flat form of paper, textile or other material, between them. Member 10 has a thinned-down portion 14 to aid entry beneath the top item. Conveniently member 10 is fixed and member 20 movable in the housing. The movement can be caused by any suitable means, such as an electrical, hydraulic or pneumatic device, represented by dotted outline 31 in housing 30. The members may be of plastics or metal or other suitable material.

Members 10 and 20 shown in cross-section so that it is seen that each is provided with a number of sensor elements 11, 12 13 on member 10 and 21, 22, 23 on member 20. The exact form of these is described below.

An arm 50 supports a fluid pressure oulet 51 so that the position of outlet 51 relative to the tip 14 of member 10 can be adjusted and then held fixed. Conveniently arm 50 is supported on the member 20 through or along which a fluid pressure conduit, not shown, can extend from fluid pressure supply connection 32. The fluid pressure supply is conveniently air at a pressure of a few bars, say 1.5 bars to 3.5 bars, to produce a jet. The jet conveniently emerges from a nozzle of 1.5 mm diameter at a flow rate of 5 litres/minute, although other values may suit other materials or sizes of item.

The sensor elements are now described.

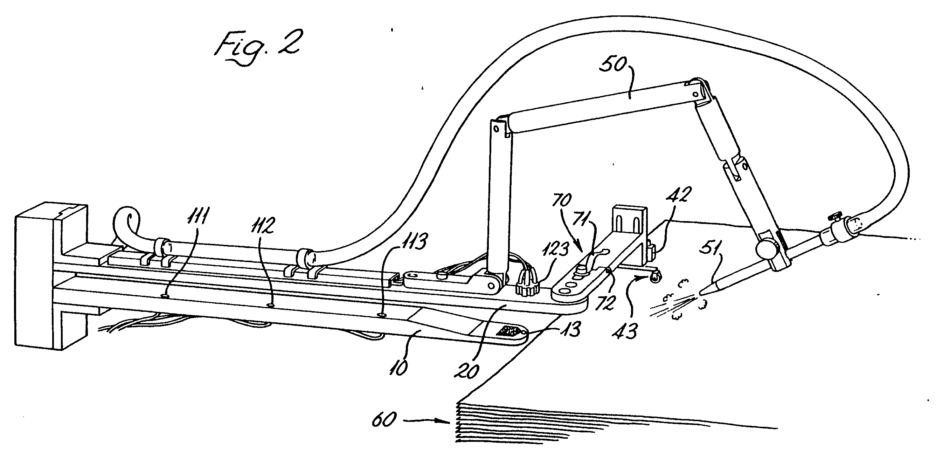

Elements 11, 21; 12, 22; 13, 23 are respectively sensor pairs arranged to detect the presence of an item between members 10 and 11. Specifically each element 11, 12, 13 is a light emitting diode (l.e.d.) to emit light. Element 13 is actually a light emitting diode with its encapsulation ground down to fit into the tip of portion 14, which is about 3 mm thick. Part of the emitting area of diode 13 and the adjacent tip may be covered as indicated by the dark zone on the member 10 by diode 13 (see Figure 2), to improve the definition of the sensing arrangement. Elements 21, 22 are photo transistors each to pick up light from the respective l.e.d. 11, 12. Element 23 is conveniently a photodiode. Elements 11, 12, 13, 21, 23 are conveniently infra-red devices for best sensitivity and freedom from interference by ambient light. A stack of items to be separated is indicated at 60. The top-most item is indicated at 62 and has an upper surface 61. Element 23 can have further functions as described below.

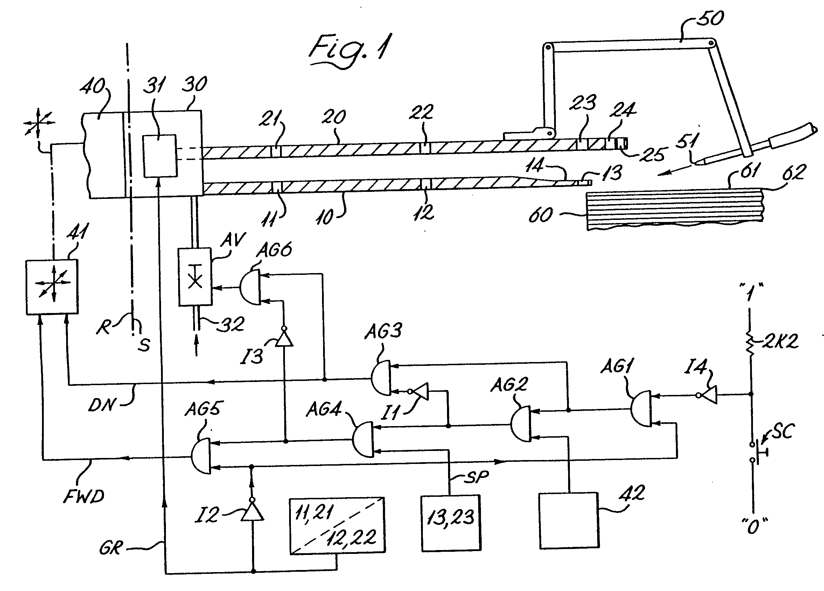

A spur 70, not shown in Figure 1, extends sideways, i.e. back from the plane of Figure 1, and carries a micro switch 42 and operating feeler 43 to sense the engagement of the feeler with the top surface 61 and stop the downward drive of the arrangement, for example on an incorrect approach which does not separate an item. Conveniently the spur 70 is spring-tensioned by a leaf spring 71 across a hinge 72 to permit yielding and prevent damage on incorrect contact with the stack 60. The spur 70 keeps the switch and feeler away from the air jet and the top item of the stack. A length of about 100 mm is suitable.

The separation action of the apparatus is as follows. The member 10 is moved to be above stack 60 away from side edges and projecting about 5 to 10 mm inwards of the front edge of the stack with the thinned-down portion 14 about 5 mm above the surface. Member 20 is moved either with member 10 or separately down towards the top surface 61 of the stack 60 and is then held in place so that a jet of air from outlet 51 is directed at and over surface 61. The jet is sized and directed so that the top item in the stack vibrates vigorously where the jet impinges on the item. For cloth items the above values produce a vibration of a frequency high enough to be contained within only the top item, the lower ones being undisturbed. This is an important feature as the provision of reliable separation of the top item is a serious problem in this art. Also only a part of the top item must be disturbed to ensure that it is not blown around bodily. A higher intensity is used first while the member 10 is moving into position to start the vibration of the top item of the stack which is then sustained by a less intense jet.

The member 10 is lowered towards surface 61 until the vibrating top item 62 "flips" over portion 14. Once on top of portion 14 item 62 will obstruct sensing elements 13, 23 and thus provide an indication that an item has been separated. The member 10 can now be moved further into and down the stack a fixed amount, say 3 mm, to ensure that item 62 remains separated. This ensures that material is not "doubled-over". Downward drive is then terminated. Members 10 and 20 are then pushed further across the stack to bring item 62 deeper into the gripper jaw formed by member 10 and 20. Sensors 12, 22 and 11, 21 determine the depth of entry of item 62. At the required depth the member 20 is moved down to member 10 to grip item 62 for removal from the stack 60 and the separation action is complete.

The above is a simplified outline of the separation action. In practice a more complex motion of the member 10 is preferred to cope with the various irregularities than can occur in an actual stack of items.

The member 10 is therefore caused to move in a search pattern over the top and front edge of the stack while the air jet operates. To start the separation of a stack of items the stack is placed beneath the working area of member 10. This area may be already defined when the member is part of a mechanism while when the member 10 is operated by a robot it need only be within the reach of the robot action. The air jet is started and member 10 moved toward the stack but kept away from the side edges of the stack. Generally this movement of the member 10 brings it to the position, mentioned earlier, without previous closer approach to the stack. The member 10 is then moved slowly outwardly of the stack in a level manner until it is some 5 mm outside the stack. The member 10 is then moved down a set amount, typically between 1 and 3 mm, and then moved to return inwardly of the stack to be some 5 to 10 mm inwards of the front edge. A higher intensity is used first while the member 10 is moved position to start the vibration of the top item of the stack which is then sustained by a less intense jet. This cycle can be repeated until an item "flips" as described above and is then gripped. In some cases the "flip" is achieved more quickly by moving the member 10 up rather than down for the return stroke. It may be also found, in some cases, that the member can be started from a position just above the front edge rather than inwardly of it. The exact sequence of movements can be determined for any particular material by a few simple trial runs as with a robot or a mechanism the control actions to produce the search steps in a required order are readily selected. Care must be taken not to move the member 10 down in too large a step and then move it in towards the stack as a second item might then be picked-up as well as the top one by forcing the thinned-down portion 14 into the stack having gone below the position at which the top item would "flip" over portion 14.

If the stack is not very regular or the items not all quite the same size then the search pattern will cope with differences of some 5 mm from the nominal position. If a "flip" is not achieved in a small number of search moves a greater horizontal movement, say 10 mm either way, may be brought into use to pick-up an excessively displaced item. The exact size of each step of the pattern will therefore depend on the material in the stack, its regularity and the size of each item. Clearly the porosity of the material can affect the effect of the air jet. Generally a "flip" is achieved most quickly if the member is moving outwardly of the stack over the vibrating item rather than inwardly of the stack.

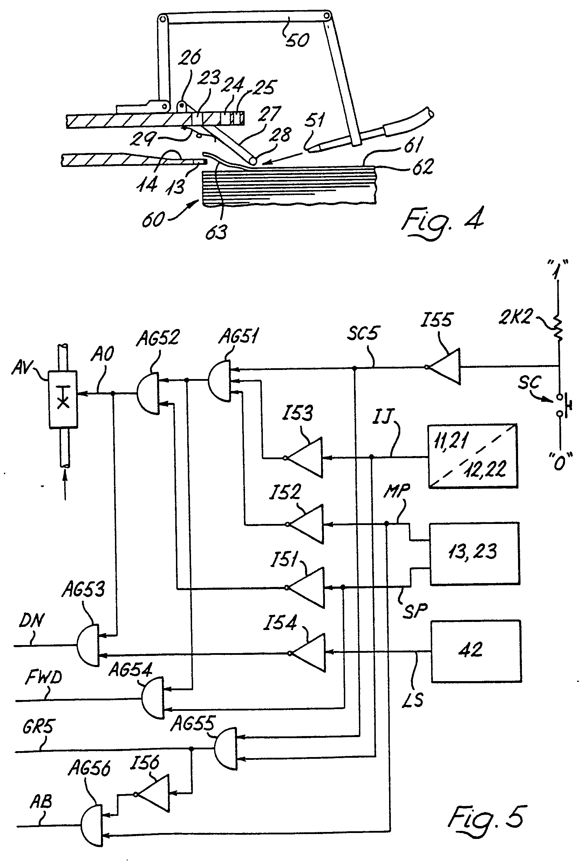

Figure 4 shows an auxiliary bar 28 which can be added for certain fabrics. When stacks of certain lightweight materials, such as poly/cotton mixture and shirting cotton, are used then by introducing the auxiliary bar 28 into the air stream from the outlet 51 the amplitude of the vibration of the moving part 63 of the top item 62 is increased. This makes the insertion of the tip 14 under the top item easier.

Conveniently the auxiliary bar 28 is supported on arms 27, only one of which is shown, from a pivot 26 on member 20. A light spring 29, which may be of leaf or coil type or other suitable form, is arranged to set the position of the bar 28 relative to the stack 60 and the jet from outlet 51. The bar 28 is about 8 mm in diameter for the materials mentioned and in operation is just above the surface 61. These dimensions can be varied for different conditions.

The bar 28 in operation reacts to the airflow from outlet 51 so that, with the support from spring 29, the bar float just above the surface 61. The bar can be considered to behave as an aerofoil in the airflow from outlet 51, which flow is directed more to the lower than the upper part of the bar 28.

No details have been given so far of the control circuits to aciheve the actions described above. The exact form will of course depend on the robot or other associated equipment and suitable techniques will be readily apparent to those skilled in such arts. For example, a simple arrangement of fluid pressure actuators and electro-fluid pressure controls will provide the required control actions for a frequently-repeated operation while a robot can be used for operations which differ significantly from time-to-time and therefore require greater change of control action.

The drawing also shows an outline of a control logic arrangement to produce the actions described above. The logic arrangement uses conventional AND or OR gates and inverters. It is assumed that logic level ONE is produced by the sensing elements when an item is present.

The operation of the control arrangement is as follows, assuming that the apparatus is mounted on a robot controllable via drive means 41 to move the apparatus in a required direction and distance and is initially in position above stack 60. In the absence of items between sensors 11, 21 or 12, 22, the output of inverter I2, together with the start control input SC, via inverter I4, enables AND gate AG1. The output of enabled AND gate AG1 applies a ONE input to one input of each of AND gates AG2, AG3. Gate AG3 is thus enabled, the other input being a ONE from inverter I1, and commands by signal DN the drive means 41 of the robot R to drive the housing 30 and thereby members 10, 20 downwards towards the stack of items 60. The output of enabled AND gate AG2 is also applied via AND gate AG6 to air valve AV, to turn on the flow of air to outlet 51. Downward drive and air supply continues until sensor 42 detects the top of the stack and the output enables AND gate AG2, which in turn disables AND gate AG3, and thus stops downward drive. The output of enabled AND gate AG2 is also applied to one input of AND gate AG4. When sensors 13, 23 detect the presence of an item over portion 14 of member 10 a signal SP is supplied to AND gate AG4. The gate is thus enabled, disabling AND gate AG6 through inverter I3 to stop air supply. Also by enabling AND gate AG4 AND gate AG5 is enabled and forward drive called for by signal FWD to complete the separation of the top item 62 from stack 60. AND gate AG5 remains enabled only until either sensors 11, 21 or 12, 22, as required, are operated by item 62. This operation also to disables AND gate AG1. Disabling AG5 stops forward drive and disabling AG1 stops downward drive, via AND gates AG2, AG3, and ends the cycle of separation. Gripping and removal of item 62 can then be carried out by unit 31 in any suitable manner in response to signal GR generated by sensors 11, 21 or 12, 22 as above.

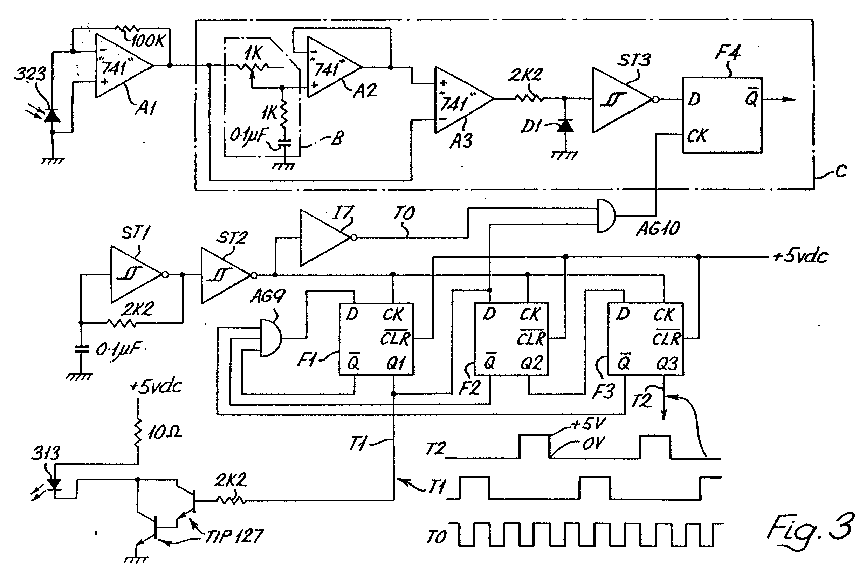

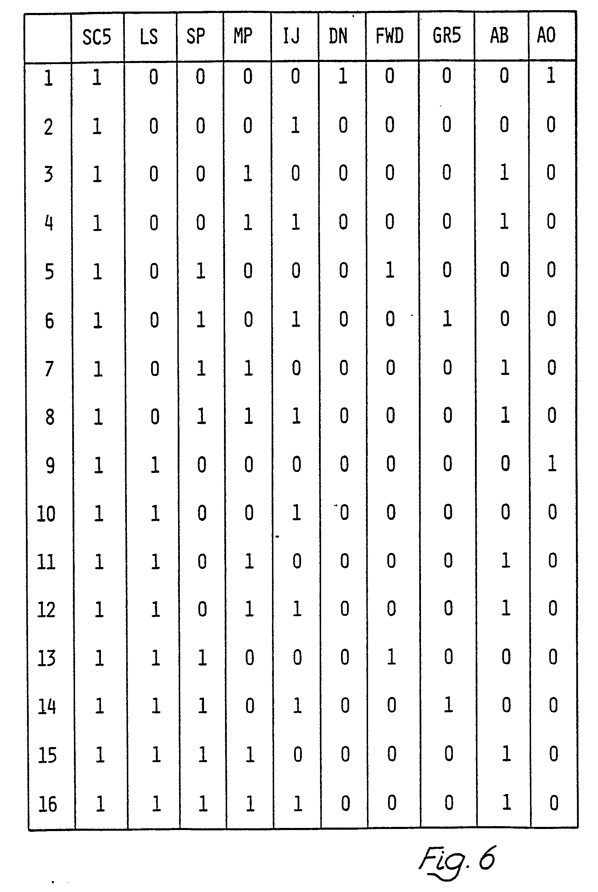

Figure 5 shows an alternative circuit for the arrangement of Figure 1 which by the picking up of more than one item at once can be checked. Sensors 13, 23 are arranged, as described below, to produce another output signal, MP, instead of output SP, when more than one item is detected between the members 10 and 20. As well as detecting two items a single item which has become folded can be detected and lead to the production of signal AB. The operation of the alternative circuit in Figure 5 is as follows, again assuming that the apparatus is mounted on a robot controllable via drive means 41 to move the apparatus in a required direction and distance and is initially in position above stack 62 (see Figure 1). The same references are used in Figure 5 for the relevant parts of Figure 1 which are used with the alternative circuit. In the absence of items between sensors 11, 21 or 12, 22 the output of inverter I53 together with the start control input SC, via inverter I55 signal S25, and the low output MP of the sensor 13, 23, via inverter I52, enables AND gate AG51. The output of enabled AND gate AG51 applies a ONE input to one input of each of AND gates AG52 and AG54. Gate AG52 is thus enabled, the other input being a ONE from inverter I51, thus signal A0 as a ONE input is applied to the air valve AV, to turn on the flow of air to outlet 51 (Figure 3). The output of enabled AND gate AG52 is also applied to AND gate AG53. AG53 is thus enabled, via a ONE output from I54 connected to the sensor 42, and produces a DN signal to command the drive means 42 of the robot R to drive the housing 30 and thereby members 10, 20 downwards towards the stack of items 60. Downward drive continues until sensor 42 detects the top of the stack and the output LS disables the output of inverter I54 and hence disables AG53 and thus stops only the downward drive, as a precaution against excess movement. When the sensor 13, 23 detects the presence of an item over portion 14 of member 10 AND gate AG52 is disabled via the ZERO output of I51 and thus stops the air supply and downward drive. AND gate AG54 is enabled by the output of AG51 and the SP (one item 62 detected) output of the sensor 13, 23, thus forward drive is called for by signal FWD to complete the separation of the top item 62 from the stack 60. AND gate AG54 remains enabled only until either sensors 11, 21 or 12, 22, as required, are operated by item 62 to produce signal IJ to disable AND gates AG51 and AG54. Disabling AND gate AG51 also disables AND gates AG52 and AG53 and ends the cycle of separation.

Gripping and removal of item 62 can then be carried out in any suitable manner under the control of signal GR5 produced by the output of AND gate AG55 which is enabled by sensors 11, 21 or 12, 22 and a ONE input from the inverter I55. An abandon cycle signal AB is supplied by the AND gate AG56. The AND gate AG56 can only be enabled by a ONE input from the inverter I56 when the output of the AND gate AG55 is disabled, and a ONE input from the MP (two items 62 detected) output of the sensor 13, 23.

The truth table, Figure 6, shows how the circuit of Figure 5 responds to ensure reliable operation in the possible combinations of operational states. Even states which should not arise in proper operation, such as at lines 2, 4 and 10 of Figure 6 are controlled.

Figure 3 shows in detail a circuit arrangement by which the output MP can be produced. The action of the circuit is to reliably distinguish between a single layer of material and two or more layers of material being between the sensors 13, 23. As shown in the circuit diagram in Figure 3 the inverting Schmitt triggers ST1, ST2 form a master clock generator which feeds a chain of D-type flip-flops F1, F2, F3. The clock waveform, after inversion in inverter I7, is shown at T0. The $\bar{Q}$ bar outputs of the flip-flops F1, F2 and F3 are ANDed by gate G1 to produce the input to the first flip-flop F1. The outputs Q1 and Q3 respectively from flip-flops F1 and F3 are used to supply to non-overlapping pulse waveforms T1, T2 as shown in the Figure. Pulse T1 feeds the infra-red l.e.d. drive circuit to the l.e.d. 313, which can be l.e.d. 13 of Figure 1. Pulse T2 is available to feed other l.e.d.'s and associated sensors at a time or times different from pulse T1 so that interference or interaction between the sensors does not occur.

The infra-red pulses emitted by l.e.d. 313 are received by the photodiode 323 along with noise and interference such as that caused by mains lighting. The output from photodiode 323 is buffered by differntial integrated circuit amplifier A1. Photodiode 323 can be the device 23 of Figure 1. The variable filter is provided at circuit portion B for the signal from amplifier A1. A buffer for the output of the filter B is provided by integrated circuit differential amplifier A2. The output of the buffer amplifier A2 is applied to one input of a further differential integrated circuit amplifier A3. The signal which has been applied to the input of the filter B is applied to the other input of the differential amplifier A3. Filter B can be adjusted to filter out the infra-red derived pulses leaving the inteference to be applied to one input of the comparator formed by amplifier A3. By the action of the comparator the output of the comparator will then be the infra-red derived pulses. Diode D1 removes the negative component of the output from amplifier A3 which output is then made compatible with TTL logic by a Schmitt trigger, trigger ST3. The output of the Schmitt trigger ST3 is applied to a D-type flip-flop F4.

The output of the master clock generator is applied to an inverter I7 and the output of the inverter applied to one input of a AND gate AG10, the other input of the AND gate is the pulse T1. The output of AND gate AG10 is applied as a clock signal to flip-flop F4. The action of flip-flop F4 is thus to produce a $\bar{Q}$ bar output at logic low on the coincidence of a pulse T1 and a signal from Schmitt trigger ST3, representing the transmission of infra-red light from l.e.d. 313 to photodiode 323. The output $\bar{Q}$ bar is logic high when a layer of material attenuates the infra-red light producing the signal from Schmitt trigger ST3. The output of flip-flop F4 is thus the signal SP referred to above with reference to Figure 1. The phasing of the clock signal T0 and the pulse T1 is arranged so that a positive-going transition of T0 is in the

middle of a pulse of T1. This inhibits flip-flop F4 from responding during the initial part of a pulse of T1 and avoids spurious responses during the switch-on of the l.e.d. 313.

The circuit portion indicated by outline C can be replicated and also connected to the output of amplifier A1 and to the output of AND gate AG10. The filter B of this further circuit can be adjusted to set the sensitivity of the further circuit so that the respective flip-flop has a $\bar{Q}$ bar output of logic high only when more than one layer of material attenuates the infra-red light passing from the l.e.d. 313 to photodiode 323. This provides signal MP of Figure 1 above. As woven and knitted and like fabrics and similar material allow some infra-red light to pass through it is possible to discriminate between the number of layers which are in the path of the infra-red light.

The variable filters B permit easy adjustment of the circuit for different materials.

A further important aspect of the invention will now be described with reference to Figure 2. The member 10 is provided with opto-electronic devices 111, 112, 113 along one edge. These devices are above to detect the presence or absence of an item over them in the gripper formed by members 10 and 20. To this end they may be self-contained transmitter/receiver devices operating on reflected light or there may be a co-operating part (not shown) in member 20 to operate by transmitted light.

The positioning of the devices on the member enables an item to be gripped in the gripper in a particular position in both dimensions of a flat item. Thus the depth of entry between the gripper member is set as described above, using devices 111, 112, 113 is required. Then by moving the slightly opened members 10 and 20 sidewways until the devices 111, 112, 113 all indicate the absence of the item the gripper can engage one edge of the item using the remaining width not occupied by the devices 111, 112, 113. The position of two adjacent edges of the item is now defined with respect to the gripper and if the gripper is caused to move in a set manner to a release point for the item then the items will be consistently released at a selected release point.

In this way items can be placed for assembly or inclusion with other items, e.g. a label could automatically be placed for sewing into a seam. Such automatic action could be achieved by a robot or a simpler pick-and-place arrangement as described above.

If required a small jet of air can be caused to emerge at the tip of arm 10 when the arm has entered the stack under a separated item. This can both aid separation and prevent the displacement of an item.

. The limit switch 42 may be replaced by other types of sensor attached to the underside of the lower jaw, member 10. Thus, a pressure sensor, a low actuation force switch, an opto reflective device or other device may be used in this position to accurately detect the position of the stack of material.

In another arrangement the spur 70 and micro switch 42 can be replaced with optoelectronic devices 24, 25 mounted on member 20. The connections for these devices and device 23, are indicated at 123. Modulated light can be used to assist in discrimination from ambient lighting.

Furthermore by using another set of gripper members in conjunction with the first set it is possible to pick-up, hold and stretch a piece of material or other item. To achieve this the sets of gripper members are arranged to pick-up the item at two spaced-apart positions and then move further apart enough to grip and tension the item between them. The opposite edges of the item may each be sensed and gripped, as explained above for one side edge, before tensioning the item. To achieve this it is desirable to position the devices 111, 112, 113 to place these on the outer edges of the respective set of members. The gripped and tensioned item can then be placed at a selected release point as mentioned above. Clearly the edge of the item connecting the opposite edges can be sensed, as described above for the two adjacent edges. If the item is of irregular shape, as is often the case with garment parts, then different entry depths into the members may be used. The members can be caused to close lightly on the item so that the item can be pulled through without risk of escape from the grip members. The devices 111, 112, 113 could be arranged to increase the grip on the edge of the item leaving them so that the item does not escape the grip. Instead of moving both sets of members one and then the other can be moved.

The various detection devices can be combined as required to carry out appropriate checks on the action of the separation technique.

The techniques described above provide a reliable separation method and apparatus for items in a stack, which is particularly suitable for "robot" or other automatic equipment. The arrangement specifically described is particularly suitable for pieces of cloth e.g. a stack of cut-out pieces to be assembled one at a time with other pieces, but clearly modifications can be made readily for other materials and applications.

**Claims**

1. Apparatus to separate a top-most item (62) from a stack (60) of items comprising a separation means (10) moveable to project over said stack (60) of items at a selected distance above the top-most item (62) of the stack; means (51) to direct an air stream at a size and an angle to the top-most item (62) of the stack adjacent the separation means (10) to cause said top-most item to vibrate at a frequency high enough to be contained substantially within said top-most item, characterised in that said means (51) to direct an air stream is controllable to change the intensity of the air jet in order to produce a higher intensity first while said separation means (10) is moving into position to start the vibration of the top-most item (62) of the stack which is then sustained by a less intense jet; and further comprising means (43) to detect the disturbance of the top-most item (62) and cause the separation means to approach the stack top and the disturbed top-most item; means (13) to detect the displacement of the vibrating disturbed top-most item (62) from the top of the stack to overlay the projecting separation means (10); and gripper means (20) responsive to the detection of said displacement of the top-most item to co-operate with the separation means to grip the item for removal from the stack.

2. Apparatus according to Claim 1 further comprising means (313, 323) to detect the overlaying of the separation means (10) with more than one item and to cause said apparatus to abandon an attempt to separate said top-most item in response to detection of overlaying with more than one item.

3. Apparatus according to Claim 2 in which the detection means (313, 323) comprises means to assess the transmissiveness of anything overlaying the separation means.

4. Apparatus according to Claim 3 in which the means to assess transmissiveness comprises filter means (B) to reject extraneous radiation.

5. Apparatus according to any preceding claim including means to assist separation which comprises a further member (27) to enhance the disturbance of the top-most item (62), the further member being resiliently supported to float, in operation, in the air stream over the top-most item (62) of the stack.

6. Apparatus according to any preceding claim in which the gripper means (20) includes means to detect the position of an edge of the top-most item in the gripper means.

7. Apparatus according to Claim 6 in which the detection means (11, 21; 12, 22; 13, 23) detects the depth to which said edge has entered the gripper means (20).

8. Apparatus according to Claim 6 or 7 in which the detection means (11, 21; 12, 22; 13, 23; 111, 112, 113) detects the displacement of an edge of the top-most item sideways within the gripper means (20).

**Patentansprüche**

1. Vorrichtung zum Entstapeln eines obersten Gegenstandes (62) von einem Stapel (60) von Gegenständen, bestehend aus einer Entstapelungsvorrichtung (10), die beweglich ist, um über den Stapel (60) von Gegenständen in einer ausgewählten Entfernung über dem obersten Gegenstand (62) des Stapels herauszuragen; aus einer Vorrichtung (51), die einen Luftstrom in einer Größe und einem Winkel zum obersten Gegenstand (62) des Stapels neben der Entstapelungsvorrichtung (10) leitet, um den obersten Gegenstand bei einer Frequenz zur Vibration zu bringen, die hoch genug ist, um diese im wesentlichen innerhalb des obersten Gegenstandes zu halten, dadurch gekennzeichnet, daß die Vorrichtung (51) zur Leitung eines Luftstromes kontrollierbar ist, um die Intensität des Luftstromes zu verändern, so daß zuerst eine höhere Intensität erhalten wird, während die Entstapelungsvorrichtung (10) sich in die Stellung bewegt, um die Vibration des obersten Gegenstandes (62) des Stapels zu starten, die dann durch einen weniger intensiven Strahl aufrecht erhalten wird; und weiter eine Vorrichtung (43), um die Unruhe des obersten Gegenstandes (62) zu erfassen und die Entstapelungsvorrichtung zur Annäherung an das obere Stapelende und den aus der Ruhelage gebrachten obersten Gegenstand zu bringen; eine Vorrichtung (13), um die Verlagerung des vibrierenden, aus der Ruhelage gebrachten obersten Gegenstandes (62) vom oberen Ende des Stapels zu erfassen, um sich auf die herausragende Entstapelungsvorrichtung (10) zu legen; und ein Greifer (20), der auf die Erfassung der Verschiebung des obersten Gegenstandes reagiert, um mit der Entstapelungsvorrichtung zusammen zu wirken, um den Gegenstand zur Entfernung vom Stapel zu ergreifen.

2. Vorrichtung nach Anspruch 1, die weiter eine Vorrichtung (313, 323) umfaßt, die erfaßt, ob die Entstapelungsvorrichtung (10) mit mehr als einem Gegenstand bedeckt ist und die Vorrichtung einen Versuch zum Entstapeln des obersten Gegenstandes abbrechen läßt, als Reaktion auf die Erfassung, daß mehr als ein Gegenstand aufgelegt ist.

3. Vorrichtung nach Anspruch 2, wobei die Detektorvorrichtung (313, 323) eine Vorrichtung umfaßt, die die Übertragbarkeit von allem ermittelt, das die Entstapelungsvorrichtung bedeckt.

4. Vorrichtung nach Anspruch 3, wobei die Vorrichtung zum Ermitteln der Übertragbarkeit einen Filter (B) umfaßt, um fremde Strahlung anzuhalten.

5. Vorrichtung nach einem der vorhergehenden Ansprüche, die eine Vorrichtung umfaßt, um die Entstapelung zu unterstützen, die ein weiteres Glied (27) umfaßt, um die Unruhe des obersten Gegenstandes (62) zu steigern, wobei das weitere Glied elastisch gelagert ist, damit es im Betrieb im Luftstrom über dem obersten Gegenstand (62) des Stapels schwebt.

6. Vorrichtung nach einem der vorhergehenden Ansprüche, wobei der Greifer (20) eine Vorrichtung einschließt, die die Lage einer Kante des obersten Gegenstandes im Greifer entdeckt.

7. Vorrichtung nach Anspruch 6, wobei der Detektor (11, 21; 12, 22; 13, 23) die Tiefe erfaßt, in der die Kante in den Greifer (20) gelangt ist.

8. Vorrichtung nach Anspruch 6 oder 7, wobei der Detektor (11, 21; 12, 22; 13, 23; 111, 112, 113) die seitliche Verschiebung einer Kante des obersten Gegenstandes im Greifer (20) erfaßt.

**Revendications**

1. Appareil pour séparer un article supérieur (62) d'une pile (60) d'articles, comprenant des moyens de séparation (10) qui peuvent être déplacés de façon à s'étendre sur la pile (60) d'articles, à une distance sélectionnée au-dessus de l'article supérieur (62) de la pile; des moyens (51) pour diriger un jet d'air d'une certaine taille et faisant un certain angle, vers l'article supérieur (62) de la pile, en position adjacente aux moyens de séparation (10), pour faire en sorte que l'article supérieur fibre à une fréquence suffisamment élevée pour que la vibration n'affecte pratiquement que l'article supérieur, caractérisé en ce que les moyens (51) destinés à diriger un jet d'air peuvent être commandés de façon à changer l'intensité du jet d'air, afin de produire tout d'abord une intensité supérieure pendant que les moyens de séparation (10) viennent en position, pour faire démarrer la vibration de l'article supérieur (62) de la pile, cette vibration étant ensuite entretenue par un jet moins intense; et en ce qu'il comprend en outre des moyens (43) destinés à détecter la perturbation de l'article supérieur (62) et à commander les moyens de séparation pour qu'ils s'approchent du sommet de la pile et de l'article supérieur perturbé; des moyens (13) pour détecter le déplacement de l'article supérieur perturbé en vibration (62) à partir du sommet de la pile, pour recouvrir les moyens de séparation (10) qui s'étendent sur la pile; et des moyens de préhension (20) qui réagissent à la détection du déplacement de l'article supérieur en coopérant avec les moyens de séparation pour saisir l'article afin de l'enlever de la pile.

2. Appareil selon la revendication 1, comprenant en outre des moyens (313, 323) pour détecter le recouvrement des moyens de séparation (10) par plus d'un article, et pour commander à l'appareil d'abandonner une tentative de séparation de l'article supérieur sous l'effet de la détection du recouvrement par plus d'un article.

3. Appareil selon la revendication 2, dans lequel les moyens de détection (313, 323) comprennent des moyens destinés à déterminer le facteur de transmission de tout objet recouvrant les moyens de séparation.

4. Appareil selon la revendication 3, dans lequel les moyens de détermination de facteur de transmission comprennent des moyens de filtrage (B) destinés à arrêter un rayonnement parasite.

5. Appareil selon l'une quelconque des revendications précédentes, comprenant des moyens pour faciliter la séparation, qui comportent une pièce supplémentaire (27) destinée à augmenter la perturbation de l'article supérieur (62) la pièce supplémentaire étant supporté de façon élastique afin de flotter, pendant le fonctionnement, dans le jet d'air au-dessus de l'article supérieur (62) de la pile.

6. Appareil selon l'une quelconque des revendications précédentes, dans lequel les moyens de préhension (20) comprennent des moyens destinés à détecter la position d'un bord de l'article supérieur dans les moyens de préhension.

7. Appareil selon la revendication 6, dans lequel les moyens de détection (11, 21; 12, 22; 13, 23) détectent la profondeur à laquelle le bord est entré dans les moyens de préhension (20).

8. Appareil selon la revendication 6 ou 7, dans lequel les moyens de détection (11, 21; 12, 22; 13, 23; 111, 112, 113) détectent le déplacement latéral d'un bord de l'article supérieur à l'intérieur des moyens de préhension (20).

Fig.1

Fig. 2

Fig. 3

Fig. 4

Fig. 5

|    | SC5 | LS | SP | MP | IJ | DN | FWD | GR5 | AB | AO |
|----|-----|----|----|----|----|----|-----|-----|----|----|
| 1  | 1   | 0  | 0  | 0  | 0  | 1  | 0   | 0   | 0  | 1  |
| 2  | 1   | 0  | 0  | 0  | 1  | 0  | 0   | 0   | 0  | 0  |
| 3  | 1   | 0  | 0  | 1  | 0  | 0  | 0   | 0   | 1  | 0  |
| 4  | 1   | 0  | 0  | 1  | 1  | 0  | 0   | 0   | 1  | 0  |
| 5  | 1   | 0  | 1  | 0  | 0  | 0  | 1   | 0   | 0  | 0  |
| 6  | 1   | 0  | 1  | 0  | 1  | 0  | 0   | 1   | 0  | 0  |
| 7  | 1   | 0  | 1  | 1  | 0  | 0  | 0   | 0   | 1  | 0  |
| 8  | 1   | 0  | 1  | 1  | 1  | 0  | 0   | 0   | 1  | 0  |
| 9  | 1   | 1  | 0  | 0  | 0  | 0  | 0   | 0   | 0  | 1  |
| 10 | 1   | 1  | 0  | 0  | 1  | 0  | 0   | 0   | 0  | 0  |
| 11 | 1   | 1  | 0  | 1  | 0  | 0  | 0   | 0   | 1  | 0  |
| 12 | 1   | 1  | 0  | 1  | 1  | 0  | 0   | 0   | 1  | 0  |
| 13 | 1   | 1  | 1  | 0  | 0  | 0  | 1   | 0   | 0  | 0  |
| 14 | 1   | 1  | 1  | 0  | 1  | 0  | 0   | 1   | 0  | 0  |
| 15 | 1   | 1  | 1  | 1  | 0  | 0  | 0   | 0   | 1  | 0  |
| 16 | 1   | 1  | 1  | 1  | 1  | 0  | 0   | 0   | 1  | 0  |

*Fig. 6*